# EUROPÄISCHE PATENTSCHRIFT

(11) **EP 1 196 278 B1**
(45) Veröffentlichungstag und Bekanntmachung des Hinweises auf die Patenterteilung: **10.12.2003**
(21) Anmeldenummer: 00954367.9
(22) Anmeldetag: 25.07.2000
(51) Int. Cl.: B29C 49/42

(54) **VORRICHTUNG UND VERFAHREN ZUR BLASFORMUNG VON BEHÄLTERN**
METHOD AND DEVICE FOR BLOW-FORMING CONTAINERS
PROCEDE ET DISPOSITIF DE FORMAGE PAR SOUFFLAGE DE RECIPIENTS

(30) Priorität: 27.07.1999 DE 19935266
(43) Veröffentlichungstag der Anmeldung: 17.04.2002
(73) Patentinhaber: SIG Corpoplast GmbH & Co. KG, 22145 Hamburg (DE)
(72) Erfinder: CHOINSKI, Julian, D-22089 Hamburg (DE)
(74) Vertreter: Klickow, Hans-Henning
(86) Internationale Anmeldenummer: DE0002453
(87) Internationale Veröffentlichungsnummer: WO01007237

(56) Entgegenhaltungen:
- EP-A- 0 435 347
- WO-A-95/05933
- WO-A-96/08356
- WO-A-96/26826
- DE-A- 19 810 238
- US-A- 4 261 949

## Beschreibung

Die Erfindung betrifft eine Vorrichtung zur Blasformung von Behältern aus einem thermoplastischen Material, die eine Heizeinrichtung zur Temperierung von Vorformlingen und mindestens eine mit relativ zueinander positionierbaren Formträgern versehene Blasstation aufweist und bei der im Bereich der Blasstation mindestens zwei Kavitäten angeordnet sind, deren Längsachsen relativ zueinander einen Abstand aufweisen, der größer ist als ein Abstand von Vorformlingslängsachsen aufeinander folgender Vorformlinge im Bereich der Heizeinrichtung , und bei der zwischen mindestens einem Heizelement im Bereich der Heizeinrichtung und der Blasstation ein den Abstand der Vorformlinge modifizierendes Spreizelement angeordnet ist.

Die Erfindung betrifft darüber hinaus ein Verfahren zur Blasformung von Behältern aus einem thermoplastischen Material, bei dem Vorformlinge temperiert und im Bereich mindestens einer Blasstation zu Behältern umgeformt werden und bei dem Formen zur Vorgabe der Behälterkontur von Formträgern gehaltert werden, die von Tragarmen positionierbar sind, sowie bei dem innerhalb jeder Blasstation mindestens zwei Vorformlinge gleichzeitig zu Behältern umgeformt und derart positioniert werden, daß die Vorformlinge bei einer Eingabe in die Blasstation eine Positionierung relativ zueinander einnehmen, die von der Positionierung während des Blasvorganges abweicht, sowie bei dem zwischen mindestens einem die Vorformlinge temperierenden Heizelement und der Blasstation mindestens eine Abstandsveränderung aufeinander folgender Vorformlinge relativ zueinander durchgeführt wird.

Derartige Vorrichtungen werden dazu verwendet, Vorformlinge aus einem thermoplastischen Material, beispielsweise Vorformlinge aus PET (Polyethylenterephthalat), innerhalb einer Blasmaschine zu Behältern umzuformen. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die Vorrichtung ist ebenfalls dazu ausgestattet, fertig geblasene Behälter aus der Blaseinrichtung zu entnehmen und weiterzubefördern.

Der grundsätzliche Aufbau einer Blasstation zur Behälterformung wird in der DE-OS 42 12 583 beschrieben. Möglichkeiten zur Temperierung der Vorformlinge werden in DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden.

Die Vorformlinge können aber auch mit anderen Trageinrichtungen gehandhabt werden. Die Verwendung von Greifzangen zur Handhabung von Vorformlingen wird beispielsweise in der FR-OS 27 20 679 beschrieben. Ein Spreizdorn, der zur Halterung in einen Mündungsbereich des vorformlings einführbar ist, wird in der WO 95 33 616 erläutert.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Überwiegend wird im Bereich einer Blasstation zu einem bestimmten Zeitpunkt jeweils ein Behälter geblasen. Insbesondere bei der Fertigung von kleinen Behältern kann es jedoch vorteilhaft sein, gleichzeitig zwei oder mehr vorformlinge in einer Blasstation zu einem Behälter aufzublasen. Eine derartige Verfahrensweise wird beispielsweise in der WO-PCT 95/05933 sowie der WO-PCT 96/26826 beschrieben. Auch im Bereich der sogenannten Einstufenverfahren sowie beim Extrusionsblasen ist die gleichzeitige Expansion mehrerer Vorformlinge im Zusammenhang mit rotierenden Blasrädern bereits bekannt. Bei Blasmaschinen mit stationär angeordneten Blasformen wird die überwiegende zahl der Maschinen mit Blasstationen ausgerüstet, die Mehrfachkavitäten aufweisen.

Unterschiedliche Möglichkeiten zur Eingabe einer Mehrzahl von Vorformlingen in eine Blasstation mit mehrerren Kavitäten sowie zur Entnahme einer Mehrzahl von geblasenen Behältern aus derartigen Blasstationen werden in der DE-OS 198 10 238 erläutert. Gemäß dieser Veröffentlichungen ist neben der Blasstation ein rotierendes Übergaberad mit Tragarmen angeordnet. Die Tragarme übernehmen mit zugeordneten Halteelementen die vorformlinge von einer Heizkette, führen eine erforderliche Abstandsänderung der Vorformlinge relativ zueinander durch und setzen die Vorformlinge in ein Positionierelement ein, das im Bereich der Blasstation angeordnet ist. Im Bereich des Positionierelementes sind die Vorformlinge relativ zueinander mit einem festen Abstand angeordnet. Es erfolgt somit lediglich eine einstufige Abstandsveränderung der Vorformlinge relativ zueinander im Bereich des Übergabeelementes.

Gemäß der EP-A- 043 53 47 erfolgt eine Abstandsveränderung der Vorformlinge ebenfalls unter Verwendung eines separaten Transportelementes. Das Transportelement als Drehtisch einer einstufigen Anlage ausgebildet, die sowohl die Vorformlinge spritztechnisch herstellt als auch die Vorformlinge zu Behältern aufbläst. Nach Vorgabe eines gewünschten Abstandes der Vorformlinge relativ zueinander wird ein Träger für die Blasstation angehoben, so daß die Blasstationen in Richtung auf den Drehtisch verfahren werden.

Die bislang bekannten Konstruktionen zu Blasstationen mit mehreren Kavitäten können noch nicht alle Anforderungen erfüllen, die an eine Produktion der Behälter mit hoher Ausstoßleistung bei gleichzeitiger schonender Materialhandhabung und hoher maschinenbaulicher Zuverlässigkeit gestellt werden.

Aufgabe der vorliegenden Erfindung ist es, eine Vorrichtung der einleitend genannten Art derart zu konstruieren, daß eine schonende Materialhandhabung bei hoher Produktionsleistung unterstützt wird.

Diese Aufgabe wird gemäß dem Anspruch 1 dadurch gelöst, daß im Bereich der Blasstation ein weiteres den Abstand der Vorformlinge relativ zueinander veränderndes Positionierelement angeordnet ist.

Weitere Aufgabe der vorliegenden Erfindung ist es, ein Verfahren der einleitend genannten Art derart anzugeben, daß eine gleichzeitige Übergabe von mindestens zwei vorformlingen an die Blasstation unterstützt wird.

Diese Aufgabe wird gemäß dem Anspruch 10 dadurch gelöst, daß eine weitere Veränderung des Abstandes der Vorformlinge relativ zueinander während des Transportes von der Eingabe in die Blasstation bis zum Erreichen der Blaspositionierung von einem Positionierelement der Blasstation durchgeführt wird.

Durch die abstandsveränderliche Handhabung der Vorformlinge im Bereich der Blasstation ist es möglich, die vorformlinge nebeneinander in den Bereich der Blasstation einzuführen und erst im Bereich der Blasstation die endgültige Positionierung sowie die Vorgabe des für die Blasverformung vorgesehenen Abstandes der Vorformlinge vorzugeben. In umgekehrter Weise kann nach einem Abschluß der Blasverformung und einem Trennen der geblasenen Behälter von den Kavitäten eine Abstandsvorgabe der geblasenen Behälter derart vorgenommen werden, daß die für eine Ausgabe erforderlichen optimalen Abstandsverhältnisse vorliegen.

Durch die vorgeschlagene mindestens zweistufige Abstandsveränderung der Vorformlinge ist es möglich, eine verbesserte Kinematik bereitzustellen, da die jeweilige Lokalisierung der Abstandsveränderung an die Funktionsweise verwendeter Handhabungs-und Übergabeeinrichtungen angepaßt werden kann, ohne das zwingend im Bereich einer einzelnen Lokalisierung ein fester Wert für eine zu realisierende Abstandsveränderung unveränderlich vorgegeben ist. Ebenfalls ermöglicht es die Aufteilung der Abstandsveränderung auf mehrere unterschiedliche Orte, eine kompakte Handhabung von zwei oder mehr Vorformlingen oder Behältern durchzuführen, da der größte Abstand, der am meisten Handhabungsraum erfordert, erst innerhalb der Blasstation eingenommen wird.

Eine kompakte Ausführungsform wird dadurch unterstützt, daß das Spreizelement im Bereich der Heizeinrichtung angeordnet ist.

Eine andere Ausführungsform besteht darin, daß das Spreizelement in Transportrichtung der Vorformlinge hinter der Heizeinrichtung angeordnet ist.

Eine gleichzeitige Durchführung einer Transportbewegung der Vorformlinge und einer Durchführung der Spreizbewegung kann dadurch erfolgen, daß das Spreizelement als kettenartige Umlenkung von Tragelementen für die Vorformlinge ausgebildet ist.

Eine hohe Nutzungsflexibilität kann dadurch erreicht werden, daß das Spreizelement im Bereich eines Übergaberades angeordnet ist.

Eine hohe funktionelle Zuverlässigkeit kann dadurch unterstützt werden, daß eine Mehrzahl von Spreizelementen im Bereich des zwischen der Heizeinrichtung und dem Blasrad angeordneten Übergaberades angeordnet sind.

Eine einfache mechanische Grundstruktur wird dadurch bereitgestellt, daß das Spreizelement zwei Spreizhebel sowie ein Stellelement aufweist.

Eine mechanische Realisierung als Kniehebel kann dadurch erreicht werden, daß das Spreizelement zusätzlich zu den Spreizhebeln Positionierhebel aufweist und daß die Positionierhebel sowohl mit den Spreizhebeln als auch mit dem Stellelement verschwenkbar verbunden sind.

Eine hohe Reproduktionsgenauigkeit bei der Durchführung der Verstellbewegungen wird dadurch erreicht, daß das Stellelement eine von einer mechanischen Kurvensteuerung beaufschlagbare Kurvenrolle aufweist.

Der apparative Aufwand kann dadurch gering gehalten werden, daß eine zweistufige Abstandsveränderung durchgeführt wird.

Eine optimale Anpassung der jeweiligen Abstandsveränderungen an konstruktiv vorhandenen Randbedingungen kann dadurch erfolgen, daß eine dreistufige Abstandsveränderung durchgeführt wird.

Eine kontinuierliche Materialhandhabung wird dadurch unterstützt, daß der Abstand der Vorformlinge relativ zueinander bei jeder Abstandsveränderung vergrößert wird.

In der Zeichnung sind Ausführungsbeispiele der Erfindung schematisch dargestellt. Es zeigen:
- Fig. 1:: Eine Übersichtsdarstellung einer Vorrichtung zur Blasformung von Behältern, die eine Heizeinrichtung, ein mit Blasstationen versehenes rotierendes Blasrad sowie diverse Übergabeeinrichtungen aufweist,
- Fig. 2:: eine perspektivische Darstellung von Antriebselementen für ein Recksystem,
- Fig. 3:: einen Querschnitt durch eine Blasstation mit dargestelltem Vorformling, teilweise expandiertem Behälter mit eingefahrener Reckstange sowie fertig geblasenem Behälter,
- Fig. 4:: einen Horizontalschnitt durch eine Blasstation mit Positionierelement für zwei Vorformlinge oder Behälter,
- Fig. 5:: eine Draufsicht auf ein Übergaberad zwischen der Heizeinrichtung und dem Blasrad mit Spreizelementen, die von Übergabearmen gehaltert sind,
- Fig. 6:: eine vergrößerte Darstellung eines Spreizelementes bei einer Anordnung der Halteelemente mit dem geringsten vorgesehenen Abstand,
- Fig. 7:: eine Darstellung des Spreizelementes gemäß Fig. 5 nach Durchführung einer teilweisen Spreizung
und
- Fig. 8:: das Halteelement gemäß Fig. 5 und Fig. 6 kurz vor einem Erreichen einer maximalen Spreizstellung.

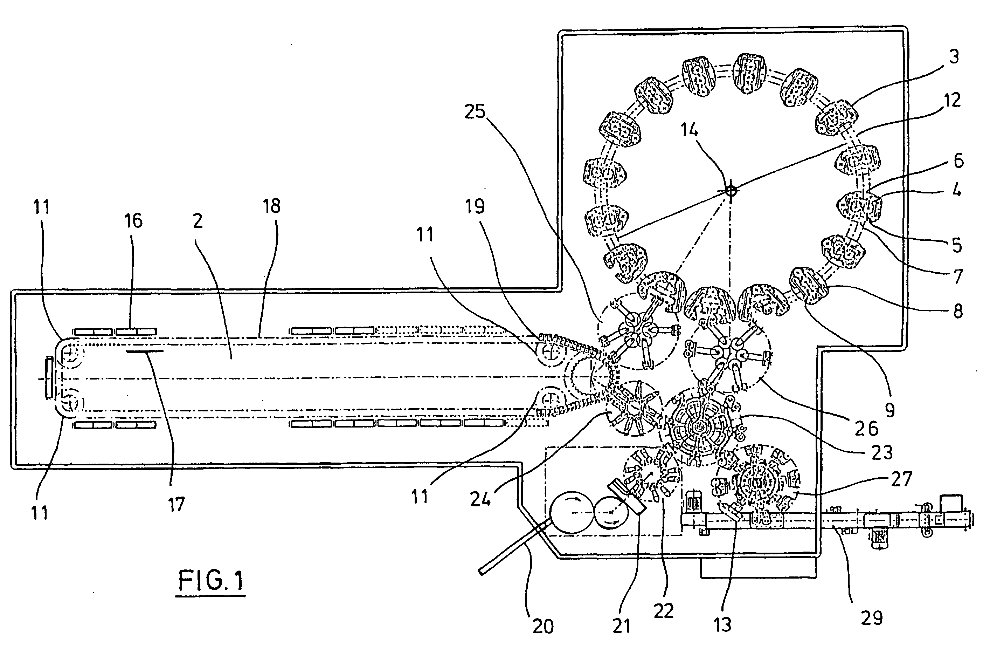

Fig. 1 zeigt den grundsätzlichen Aubau einer Blasmaschine, die mit einem rotierenden Blasrad (12) sowie einer Heizeinrichtung (2) für zu temperierende Vorformlinge (1) ausgestattet ist. Entlang eines Umfanges des Blasrades (12) sind Blasstationen (3) angeordnet, die jeweils Formträger (4, 5) aufweisen. Die Formträger (4, 5) sind von Tragarmen (6, 7) gehaltert und dienen zur Positionierung von Formelementen, typischerweise von Formhälften (8, 9).

Die Tragarme (6, 7) sind relativ zu einem Basisschwenklager (10) drehbeweglich gelagert. Das Blasrad (12) rotiert relativ zu einer Blasradachse (14) und das Basisschwenklager (10) ist in radialer Richtung der Blasradachse (14) zugewandt angeordnet.

Bei der in Fig. 1 dargestellten Ausführungsform ist die Heizeinrichtung (2) mit einer Transportkette (18) versehen, die die zu erwärmenden Vorformlinge (1) entlang von Heizelementen (16) transportiert. Die Heizelemente (16) können beispielsweise als IR-Strahler ausgebildet sein. Es ist aber ebenfalls möglich, in anderen Frequenzbereichen operierende Strahler oder eine Konvektionsheizung vorzusehen. Bei der dargestellten Ausführungsform sind entlang des Transportweges der Vorformlinge (1) die Heizelemente (16) einseitig angeordnet und den Heizelementen (16) gegenüberliegend sind Reflektoren (17) vorgesehen. Grundsätzlich ist auch eine beidseitige Anordnung von Heizelementen (16) realisierbar.

Im Bereich der Transportkette (18) sind die Vorformlinge (1) von Tragelementen (19) gehaltert. Die Tragelemente (19) können beispielsweise als Transportdorne ausgebildet sein, auf die die Vorformlinge (1) aufgesteckt werden. Ebenfalls ist es denkbar, eine Halterung der Vorformlinge (1) über Zangen oder Spreizdorne vorzusehen. Eine weitere Variante besteht darin, im Bereich der Heizeinrichtung umlaufende Tragelemente (19) zu verwenden, die separate Transportdorne haltern.

Insbesondere ist daran gedacht, die Transportkette (18) aus kettenartig miteinander verbundenen Halterungselementen auszubilden, die jeweils die separaten Tragelemente (19) für die Vorformlinge (1) haltern. Eine Führung der Transportkette (18) erfolgt mit Hilfe von Umlenkrädern (11).

Eine Eingabe der Vorformlinge (1) kann derart erfolgen, daß die Vorformlinge (1) zunächst entlang einer Transportschiene (20), in deren Bereich die Vorformlinge (1) mit ihren Mündungen nach oben angeordnet sind, einer Wendeeinrichtung (21) zugeführt werden, die die Vorformlinge (1) mit ihren Mündungen nach unten dreht und zu einem Eingaberad (22) übergibt. Das Eingaberad (22) ist durch Übergaberäder (23, 24) mit der Heizeinrichtung (2) gekoppelt. Insbesondere ist daran gedacht, die Vorformlinge (1) bereits im Bereich des dem Eingaberad (22) zugewandten Übergaberades (23) auf die Tragelemente (19) aufzusetzen.

Die Heizeinrichtung (2) ist von einem Übergaberad (25) mit dem Blasrad (12) gekoppelt und im Bereich der Blasstationen (3) fertiggeblasene Behälter (13) werden vom Blasrad (12) zu einem Entnahmerad (26) übergeben. Das Entnahmerad (26) ist über das Übergaberad (23) mit einem Ausgaberad (27) gekoppelt, das die geblasenen Behälter (13) in den Bereich einer Ausgabestrecke (29) überführt. Im Bereich des Ausgaberades (27) kann eine zweckmäßige Änderung der räumlichen Orientierung der geblasenen Behälter (13) durchgeführt werden.

Zur Ermöglichung einer hohen Wärmeeinbringung in die Vorformlinge (1) ohne Gefahr einer Überhitzung der äußeren Oberfläche ist es möglich, im Bereich der Heizeinrichtung (2) zusätzlich zu den Heizelementen (16) Gebläse anzuordnen, die Kühlluft in den Bereich der Vorformlinge (1) leiten. Beispielsweise ist es möglich, in Transportrichtung der Vorformlinge (1) abwechselnd Heizelemente (16) und Gebläse nacheinander zu positionieren.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

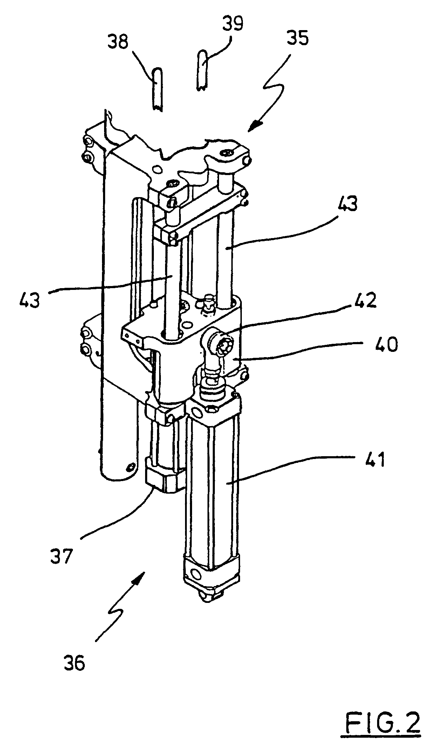

Fig. 2 zeigt eine mögliche Realisierung für eine Reckeinrichtung (35), die dafür vorgesehen ist, Reckstangen (38, 39) vor einem Aufblasen der Vorformlinge (1) zur Durchführung einer Längsreckung in die Vorformlinge (1) einzuführen. Insbesondere ist es möglich, mit Hilfe der Reckeinrichtung (35) zwei oder mehr Reckstangen (38, 39) gleichzeitig in die jeweils zugeordneten Vorformlinge (1) der betreffenden Blasstation (3) einzufahren.

Bei der in Fig. 2 dargestellten Ausführungsform ist das Recksystem derart ausgebildet, daß eine Tandem-Anordnung von zwei Zylindern (36) bereitgestellt ist. Von einem Primärzylinder (37) werden die Reckstangen (38, 39) zunächst vor Beginn des eigentlichen Reckvorganges bis in den Bereich des Bodens des Vorformlings (1) gefahren. Während des eigentlichen Reckvorganges wird der Primärzylinder (37) mit ausgefahrener Reckstange gemeinsam mit einem den Primärzylinder (37) tragenden Schlitten (40) von einem Sekundärzylinder (41) oder über eine Kurvensteuerung positioniert. Insbesondere ist daran gedacht, statt des Sekundärzylinders (41) eine Kurvensteuerung derart einzusetzen, daß von einer Führungsrolle (42), die während der Durchführung des Reckvorganges an einer Kurvenbahn entlanggleitet, eine aktuelle Reckposition vorgegeben wird. Die Führungsrolle (42) kann auch vom Sekundärzylinder (41) gegen eine Führungsbahn gedrückt werden. Der Schlitten (40) gleitet entlang von zwei Führungselementen (43).

Zur Ermöglichung eines Einsetzens der Vorformlinge (1) in die Blasstation (3) und zur Ermöglichung eines Herausnehmens der fertigen Behälter (13) besteht die Blasform zusätzlich zu den Formhälften (8, 9) aus einem Bodenteil (44), der von einer Hubvorrichtung positionierbar ist. Der Vorformling (1) kann im Bereich der Blasstation (3) von einem Tragelement (19), beispielsweise einem Transportdorn, gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasstation (3) einzusetzen.

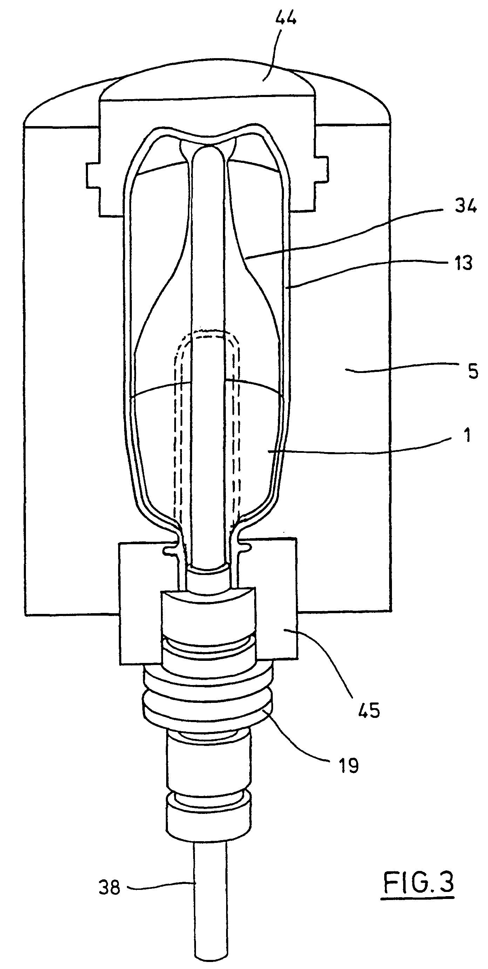

Zur Anpassung an unterschiedliche Formen des Mündungsabschnittes des Vorformlings (1) ist gemäß Fig. 3 die Verwendung separater Gewindeeinsätze (45) im Bereich der Blasform (3) vorgesehen. Zusätzlich zum geblasenen Behälter (13) und dem gestrichelt dargestellten Vorformling (1) ist auch die sich entwickelnde Blase (34) abgebildet.

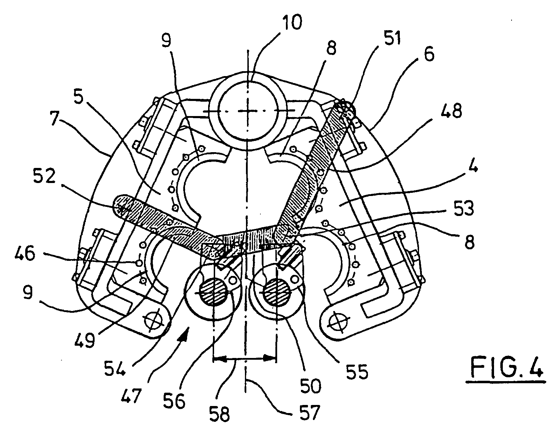

Fig. 4 zeigt einen horizontalen Schnitt durch die Blasstation (3). Es ist insbesondere erkennbar, daß im Bereich jedes Formträgers (4, 5) mehrere Formhälften (8, 9) angeordnet sind. Jeweils ein Paar von Formhälften (8, 9) ist einander gegenüberliegend angeordnet, um eine Kavität auszubilden. Die Anzahl der Werkzeuge je Blasstation (3) entspricht somit der Anzahl der gleichzeitig herzustellenden Behälter (13). Gegenüber der Verwendung eines gemeinsamen Werkzeuges für alle gleichzeitig herzustellenden Behälter (13) weist die dargestellte Ausführungsform den Vorteil einer größeren Modularisierung bei Verwendung einer größeren Anzahl einfach gestalteter Bauelemente auf. Die Herstellungskosten können hierdurch reduziert werden.

Jeweils hinter den Formhälften (8, 9) sind innerhalb der Formträger (4, 5) Temperiermittelkanäle (46) für ein zirkulierendes Temperiermittel abgebildet.

Zur Handhabung der Vorformlinge (1) sowie der geblasenen Behälter (13) innerhalb der Blasstation (3) wird ein Positionierelement (47) verwendet. Das Positionierelement (47) besteht aus zwei Traghebeln (48, 49) sowie einem die Traghebel (48, 49) miteinander verbindenen Querhebel (50). Im Bereich jeweils eines Endes sind die Traghebel (48, 49) über Schwenkgelenke (51, 52) im Bereich der Tragarme (6, 7) angelenkt. Über Schwenkgelenke (53, 54), die jeweils im Bereich von Enden der Traghebel (48, 49) angeordnet sind, die den Schwenkgelenken (51, 52) gegenüberliegen, erfolgt eine Verbindung der Traghebel (48, 49) mit dem Querhebel (50).

Im Bereich der den Schwenkgelenken (53, 54) zugewandten Enden der Traghebel (48, 49) ist jeweils ein Halteelement (55, 56) für die Vorformlinge (1) beziehungsweise die geblasenen Behälter (13) angeordnet.

Die Längendimensionierung der Hebel (48, 49, 50) sowie die Positionierung der Schwenkgelenke (51, 52, 53, 54) erfolgt derart, daß bei dem in Fig. 4 dargestellten Betriebszustand eine Anordnung der Halteelemente (55, 56) im wesentlichen quer zu einer Mittellinie (57) der Blasstation (3) erfolgt und daß Mittellinien der Halteelemente (55, 56) relativ zueinander einen Eingabeabstand (58) aufweisen.

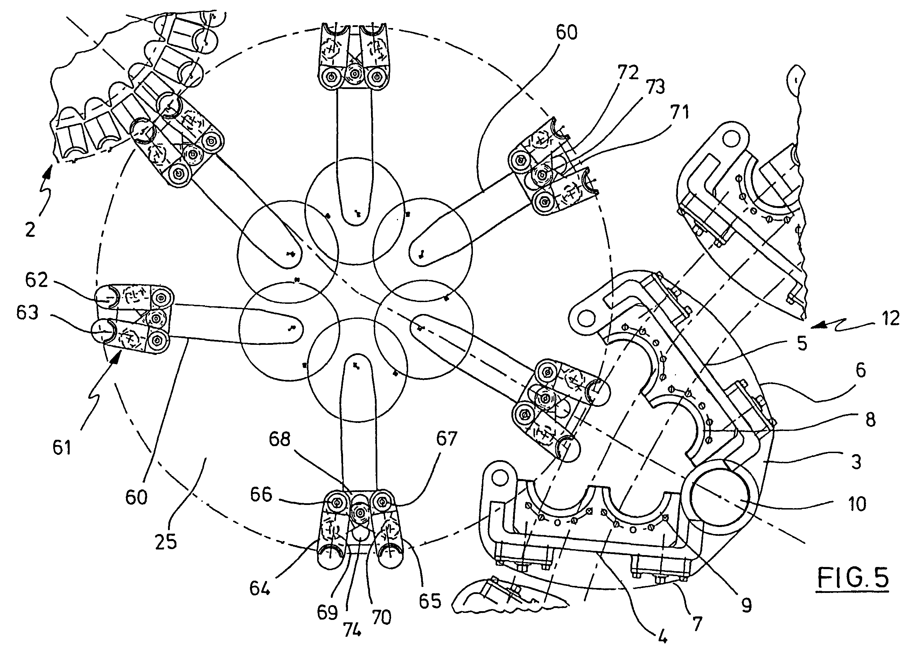

Fig. 5 zeigt in einer vergrößerten Darstellung die Konstruktion des zwischen der Heizeinrichtung (2) und dem Blasrad (12) angeordneten Übergaberades (25). Es ist erkennbar, daß das Übergaberad (25) Übergabearme (60) aufweist, die jeweils ein Spreizelement (61) haltern, das in der dargestellten Ausführungsform zwei Aufnahmeelemente (62, 63) für Vorformlinge (1) aufweist. Die Aufnahmeelemente (62, 63) sind in Endbereichen von Spreizhebeln (64, 65) angeordnet. Die Spreizhebel (64, 65) sind im Bereich ihrer den Aufnahmeelementen (62, 63) abgewandten Enden über Schwenkgelenke (66, 67) mit einem Quersegment (68) des Übergabearmes (60) gekoppelt.

Eine weitere Kopplung erfolgt über Schwenkgelenke (69, 70) mit Positionierhebeln (71, 72). Die Schwenkgelenke (69, 70) sind hierbei zwischen den Schwenkgelenken (66, 67) und den Aufnahmeelementen (62, 63) angeordnet. In ihren den Schwnkgelenken (69, 70) abgewandten Endbereichen sind die Positionierhebel (71, 72) verschwenkbar mit einem Stellelement (73) gekoppelt, das innerhalb eines Längsschlitzes (74) des Übergabearmes (60) geführt ist. Das Stellelement (73) ist zusätzlich mit einer Kurvenrolle verbunden, um eine mechanische Verstellung zu ermöglichen.

Durch die verschwenkbare Kombination der Spreizhebel (64, 65), der Positionierhebel (71, 72) sowie des Übergabearmes (60) und des Stellelementes (63) wird eine Kniehebelverstellung bereitgestellt. Bei einer Längsverschiebung des Stellelementes (73) innerhalb des Längsschlitzes (74) wird hierdurch eine Spreizung oder eine Annäherung der Aufnahmeelemente (62, 63) relativ zueinander durchgeführt.

Aus Fig. 5 ist insbesondere erkennbar, daß die Spreizelemente (61) bei einer konstruktionsbedingten größten Annäherung der Aufnahmeelemente (62, 63) aneinander die Vorformlinge (1) von der Heizeinrichtung (2) übernimmt. Bei einer anschließenden Drehung des Übergaberades (25) erfolgt sowohl ein Spreizvorgang der Spreizelemente (61) als auch eine Verschwenkung der Übergabearme (60) relativ zueinander. Durch diese Verschwenkung der Übergabearme (60) relativ zueinander kann im Bereich der Übergabe der Vorformlinge (1) von der Heizeinrichtung (2) zu den Spreizelementen (61) sowie bei der Übergabe der Vorformlinge (1) von den Spreizelementen (61) zum Positionierelement (47) eine verlängerte Übergabezeit sowie eine verbesserte Kinematik bereitgestellt werden.

Grundsätzlich sind mehrere Varianten zur Durchführung einer mehrstufigen Abstandsveränderung der Vorformlinge (1) beziehungsweise der geblasenen Behälter (13) denkbar. Bei der in Fig. 5 dargestellten Variante erfolgt eine dreistufige Abstandsvergrößerung. Eine erste Abstandsvergrößerung wird bereits im Bereich der Heizeinrichtung (2) durchgeführt, da die im Bereich der Heizeinrichtung (2) umlaufenden Tragelemente (19) durch die vorgesehene Umlenkung in ihren die Vorformlinge (1) halternden Bereichen gespreizt werden. Die zweite Abstandsveränderung erfolgt im Bereich des Übergaberades (25) und die letzte Stufe der Abstandsveränderung wird dann im Bereich der Blasstation (3) über das Positionierelement (47) realisiert.

Alternativ ist es auch denkbar, lediglich eine zweistufige Abstandsvergrößerung vorzusehen. Beispielsweise ist es denkbar, eine erste Abstandsvergrößerung im Bereich der Heizeinrichtung (2) vorzusehen, die Vorformlinge (1) dann mit zunächst gleichbleibendem Abstand zueinander im Bereich des Übergaberades (25) zu transportieren und die zweite Stufe der Abstandsveränderung dann im Bereich der Blasstation (3) durchzuführen. Ebenfalls ist es möglich, im Bereich der Heizeinrichtung (2) keine Abstandsveränderung zu realisieren und die zwei Stufen der Abstandsveränderung einerseits im Bereich des Übergaberades (25) und andererseits im Bereich der Blasstation (3) zu realisieren. Ebenfalls ist eine mehrstufige Abstandsveränderung vor einer Übergabe der Vorformlinge (1) an die Blasstation (3) möglich.

Fig. 5 zeigt eine vergrößerte Darstellung des Spreizelementes (61) bei einer größtmöglichen Annäherung der Aufnahmeelemente (62, 63) aneinander.

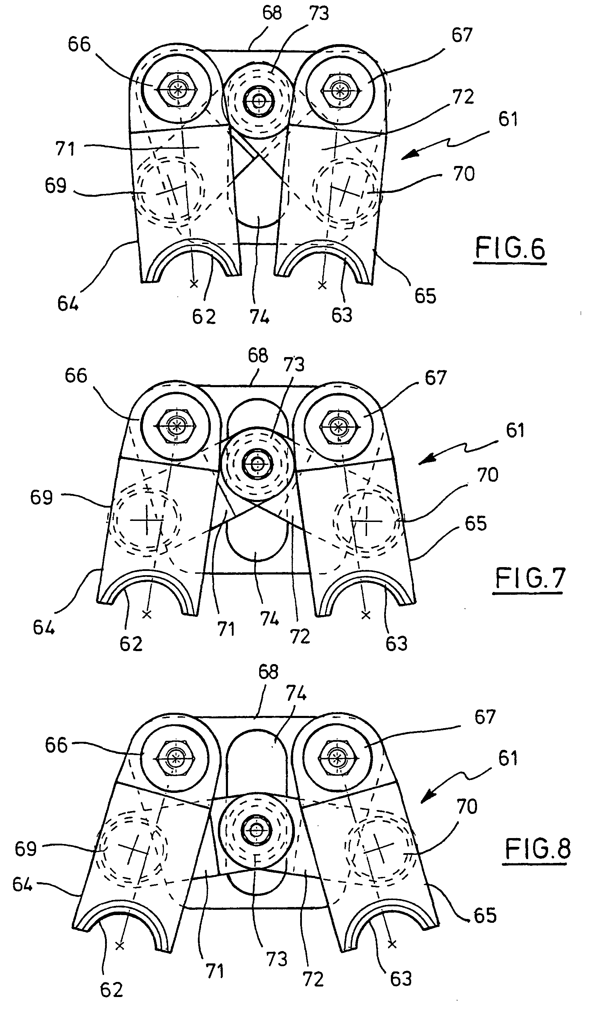

Gemäß Fig. 6 erfolgte bereits eine teilweise Verschiebung des Stellelementes (73) innerhalb des Längsschlitzes (74) und hierdurch wurde eine Auseinanderspreizung der Aufnahmeelemente (62, 63) hervorgerufen.

Gemäß Fig. 7 ist durch eine weitere Positionierung des Stellelementes (73) entlang des Längsschlitzes (74) der Spreizvorgang nahezu abgeschlossen.

Die Bewegung des Stellelementes (73) innerhalb des Längsschlitzes (74) erfolgt zweckmäßigerweise über eine Kurvenrolle, die in Abhängigkeit von einer jeweiligen Rotationsbewegung des Übergaberades (25) an zugeordneten Kurvensegmenten entlanggeführt wird. Die Bewegungsvorgänge können hierdurch exakt reproduzierbar durchlaufen werden.

## Patentansprüche

1. Vorrichtung zur Blasformung von Behältern (13) aus einem thermoplastischen Material, die eine Heizeinrichtung (2) zur Temperierung von Vorformlingen (1) und mindestens eine mit relativ zueinander positionierbaren Formträgern (4, 5) versehene Blasstation (3) aufweist und bei der im Bereich der Blasstation (3) mindestens zwei Kavitäten angeordnet sind, deren Längsachsen relativ zueinander einen Abstand aufweisen, der größer ist als ein Abstand von Vorformlingslängsachsen aufeinander folgender Vorformlinge (1) im Bereich der Heizeinrichtung (2), und bei der zwischen mindestens einem Heizelement (16) im Bereich der Heizeinrichtung (2) und der Blasstation (3) ein den Abstand der Vorformlinge (1) modifizierendes Spreizelement (61) angeordnet ist, **dadurch gekennzeichnet, daß** im Bereich der Blasstation (3) ein weiteres den Abstand der Vorformlinge (1) relativ zueinander veränderndes Positionierelement (47) angeordnet ist.

2. Vorrichtung nach Anspruch 1, **dadurch gekennzeichnet, daß** das Spreizelement (61) im Bereich der Heizeinrichtung (2) angeordnet ist.

3. Vorrichtung nach Anspruch 1, **dadurch gekennzeichnet, daß** das Spreizelement (61) in Transportrichtung der Vorformlinge (1) hinter der Heizeinrichtung (2) angeordnet ist.

4. Vorrichtung nach Anspruch 1 oder 2, **dadurch gekennzeichnet, daß** das Spreizelement (61) als kettenartige Umlenkung von Tragelementen (19) für die Vorformlinge (1) ausgebildet ist.

5. Vorrichtung nach einem der Ansprüche 1 bis 4, **dadurch gekennzeichnet, daß** das Spreizelement (61) im Bereich eines Übergaberades (25) angeordnet ist.

6. Vorrichtung nach Anspruch 5, **dadurch gekennzeichnet, daß** eine Mehrzahl von Spreizelementen (61) im Bereich des zwischen der Heizeinrichtung (2) und dem Blasrad (12) angeordneten Übergaberades (25) angeordnet sind.

7. Vorrichtung nach einem der Ansprüche 1 bis 6, **dadurch gekennzeichnet, daß** das Spreizelement (61) zwei Spreizhebel (64, 65) sowie ein Stellelement (73) aufweist.

8. Vorrichtung nach einem der Ansprüche 1 bis 7, **dadurch gekennzeichnet, daß** das Spreizelement (61) zusätzlich zu den Spreizhebeln (64) Positionierhebel (71, 72) aufweist und daß die Positionierhebel (71, 72) sowohl mit den Spreizhebeln (64, 65) als auch mit dem Stellelement (73) verschwenkbar verbunden sind.

9. Vorrichtung nach einem der Ansprüche 1 bis 8, **dadurch gekennzeichnet, daß** das Stellelement (73) eine von einer mechanischen Kurvensteuerung beaufschlagbare Kurvenrolle aufweist.

10. verfahren zur Blasformung von Behältern (13) aus einem thermoplastischen Material, bei dem Vorformlinge (1) temperiert und im Bereich mindestens einer Blasstation (3) zu Behältern (13) umgeformt werden und bei dem Formen zur Vorgabe der Behälterkontur von Formträgern (4, 5) gehaltert werden, die von Tragarmen(6, 7) positionierbar sind sowie bei dem innerhalb jeder Blasstation (3) mindestens zwei Vorformlinge (1) gleichzeitig zu Behältern (13) umgeformt und derart positioniert werden, daß die vorformlinge (1) bei einer Eingabe in die Blasstation (3) eine Positionierung einnehmen, die von der Positionierung während des Blasvorganges abweicht, sowie bei dem zwischen mindestens einem die Vorformlinge (1) temperierenden Heizelement (16) und der Blasstation (3) mindestens eine Abstandsveränderung aufeinander folgender Vorformlinge (1) relativ zueinander von einem Spreizelement (61) und eine weitere Veränderung des Abstandes der Vorformlinge (1) relativ zueinander während des Transportes von der Eingabe in die Blasstation (3) bis zum Erreichen der Blaspositionierung durchgeführt werden, **dadurch gekennzeichnet, daß** die weitere Veränderung des Abstandes der Vorformlinge relativ zueinander von einem Positionierelement (47) der Blasstation (3) durchgeführt wird.

11. Verfahren nach Anspruch 10, **dadurch gekennzeichnet, daß** die weitere Abstandsveränderung im Bereich der Heizeinrichtung (2) durchgeführt wird.

12. Verfahren nach Anspruch 10, **dadurch gekennzeichnet, daß** die weitere Abstandsveränderung in Transportrichtung hinter der Heizeinrichtung (2) durchgeführt wird.

13. Verfahren nach Anspruch 10, **dadurch gekennzeichnet, daß** die weitere Abstandsveränderung im Bereich eines Übergaberades durchgeführt wird.

14. Verfahren nach einem der Ansprüche 10 bis 13, **dadurch gekennzeichnet, daß** eine zweistufige Abstandsveränderung durchgeführt wird.

15. Verfahren nach einem der Ansprüche 10 bis 13, **dadurch gekennzeichnet, daß** eine dreistufige Abstandsveränderung durchgeführt wird.

16. Verfahren nach einem der Ansprüche 10 bis 15, **dadurch gekennzeichnet, daß** der Abstand der Vorformlinge (1) relativ zueinander bei jeder Abstandsveränderung vergrößert wird.

## Claims

1. Device for blow-moulding containers (13) from a thermoplastic material, which device has a heating apparatus (2) for tempering parisons (1) and at least one blowing station (3) provided with mould-carriers (4, 5) that can be positioned relative to one another; and in which device there are disposed, in the vicinity of the blowing station (3), at least two cavities whose longitudinal axes have a distance, relative to one another, which is greater than a distance between longitudinal axes of consecutive parisons (1) in the vicinity of the heating apparatus (2); and in which device a spreading element (61) which modifies the distance between the parisons (1) is disposed between at least one heating element (16) in the vicinity of the heating apparatus (2) and the blowing station (3), **characterised in that** another positioning element (47) which changes the distance of the parisons (1) relative to one another is disposed in the vicinity of the blowing station (3).

2. Device according to claim 1, **characterised in that** the spreading element (61) is disposed in the vicinity of the heating apparatus (2).

3. Device according to claim 1, **characterised in that** the spreading element (61) is disposed after the heating apparatus (2) in the direction of transport of the parisons (1).

4. Device according to claim 1 or 2, **characterised in that** the spreading element (61) is constructed as a chain-like system for rerouting carrying elements (19) for the parisons (1).

5. Device according to one of claims 1 to 4, **characterised in that** the spreading element (61) is disposed in the vicinity of a delivery wheel (25).

6. Device according to claim 5, **characterised in that** a plurality of spreading elements (61) are disposed in the vicinity of the delivery wheel (25) disposed between the heating apparatus (2) and the blowing wheel (12).

7. Device according to one of claims 1 to 6, **characterised in that** the spreading element (61) has two spreading levers (64, 65) and also an adjusting element (73).

8. Device according to one of claims 1 to 7, **characterised in that** the spreading element (61) has positioning levers (71, 72) in addition to the spreading levers (64), and that the said positioning levers (71, 72) are swivellably connected both to the spreading levers (64, 65) and also to the adjusting element (73).

9. Device according to one of claims 1 to 8, **characterised in that** the adjusting element (73) has a cam roller which can be acted upon by a mechanical cam control system.

10. Process for blow-moulding containers (13) from a thermoplastic material, in which process parisons (1) are tempered and reshaped in the vicinity of at least one blowing station (3) to form containers (13); and in which process moulds for predetermining the container contour are held by mould-carriers (4, 5) which can be positioned by carrying arms (6, 7); and in which process, within each blowing station (3), at least two parisons (1) are simultaneously reshaped to form containers (13) and positioned in such a way that the said parisons (1) assume, on input into the blowing station (3), positioning which deviates from the positioning during the blowing operation; and also in which process at least one change in the distance of consecutive parisons (1) relative to one another is carried out, between at least one heating element (16) that tempers the said parisons (1) and the blowing station (3), by a spreading element (61), and a further change in the distance of the parisons (1) relative to one another is carried out during transport from the input into the blowing station (3) until the blowing positioning has been reached, **characterised in that** the further change in the distance of the parisons relative to one another is carried out by a positioning element (47) belonging to the blowing station (3).

11. Process according to claim 10, **characterised in that** the further change in distance is carried out in the vicinity of the heating apparatus (2).

12. Process according to claim 10, **characterised in that** the further change in distance is carried out after the heating apparatus (2) in the direction of transport.

13. Process according to claim 10, **characterised in that** the further change in distance is carried out in the vicinity of a delivery wheel.

14. Process according to one of claims 10 to 13, **characterised in that** a two-stage change in distance is carried out.

15. Process according to one of claims 10 to 13, **characterised in that** a three-stage change in distance is carried out.

16. Process according to one of claims 10 to 15, **characterised in that** the distance of the parisons (1) relative to one another is increased at each change in distance.

## Revendications

1. Dispositif de moulage par soufflage de récipients (13) en un matériau thermoplastique, qui présente un dispositif de chauffage (2) pour tempérer les préformés (1) et au moins une station de soufflage (3) pourvue de supports des moules (4, 5) positionnables l'un par rapport à l'autre, et où sont disposées au niveau de la station de soufflage (3), au moins deux cavités, leurs axes longitudinaux forment un écart l'un par rapport à l'autre, plus grand qu'un écart des axes longitudinaux des préformés de préformés (1) successifs au niveau du dispositif de chauffage (2), et où entre au moins un élément de chauffage (16) au niveau du dispositif de chauffage (2) et la station de soufflage (3), un élément d'écartement (61) modifiant l'écart des préformés (1) est disposé, **caractérisé en ce que** au niveau de la station de soufflage (3) un autre élément de positionnement (47) modifiant l'écart des préformés l'un par rapport à l'autre est disposé.

2. Dispositif selon la revendication 1, **caractérisé en ce que** l'élément d'écartement (61) est placé au niveau du dispositif de chauffage (2).

3. Dispositif selon la revendication 1, **caractérisé en ce que** l'élément d'écartement (61) est placé en direction du transport des préformés (1) derrière le dispositif de chauffage (2).

4. Dispositif selon la revendication 1 ou 2, **caractérisé en ce que** l'élément d'écartement (61) est réalisé en déviation sous forme de chaîne d'éléments de support (19) pour les préformés (1).

5. Dispositif selon l'une quelconque des revendications 1 à 4, **caractérisé en ce que** l'élément d'écartement (61) est placé au niveau d'une roue de remise (25).

6. Dispositif selon la revendication 5, **caractérisé en ce que** plusieurs éléments d'écartement (61) sont disposés au niveau de la roue de remise (25) située entre le dispositif de chauffage (2) et la roue de soufflage (12).

7. Dispositif selon l'une quelconque des revendications 1 à 6, **caractérisé en ce que** l'élément d'écartement (61) dispose de deux leviers d'écartement (64, 65) et d'un élément de placement (73).

8. Dispositif selon l'une quelconque des revendications 1 à 7, **caractérisé en ce que** l'élément d'écartement (61) présente en plus des leviers d'écartement (64), des leviers de positionnement (71, 72) et les leviers de positionnement (71,72) sont reliés d'une part aux leviers d'écartement (64, 65) et sont reliés d'autre part, d'une façon pivotable, à l'élément de placement (73).

9. Dispositif selon l'une quelconque des revendications 1 à 8, **caractérisé en ce que** l'élément de placement (73) présente un réglage courbe mécanique muni d'un rouleau de guidage.

10. Procédé pour le moulage par soufflage de récipients (13) en un matériau thermoplastique, où les préformés (1) sont tempérés et moulés en récipients (13) au niveau d'au moins une station de soufflage (3), et où des moules pour donner le contour de récipient sont fixés par des supports de moule (4, 5), qui sont positionnables par des bras de support (6, 7) et où dans chaque station de soufflage (3), au moins deux préformés sont moulés en récipients (13) simultanément et positionnés de sorte que les préformés (1), lors d'une entrée dans la station de soufflage (3), prennent un positionnement qui varie du positionnement lors du procédé de soufflage, et où est réalisé entre au moins un élément de chauffage (16) tempérant les préformés (1) et la station de soufflage (3) au moins une modification d'écart des préformés (1) successifs l'un par rapport à l'autre, par un élément d'écartement (61) et encore une modification d'écartement des préformés (1) l'un par rapport à l'autre pendant le transport de l'entrée dans la station de soufflage (3) jusqu'à l'arrivé au positionnement de soufflage, **caractérisé en ce que** l'autre modification d'écart des préformés (1) l'un par rapport à l'autre est réalisée par un élément de positionnement (47) de la station de soufflage (3).

11. Procédé selon la revendication 10, **caractérisé en ce qu'**une autre modification d'écart est réalisée au niveau du dispositif de chauffage (2).

12. Procédé selon la revendication 10, **caractérisé en ce que** l'autre modification d'écart en direction de transport est réalisée derrière le dispositif de chauffage (2).

13. Procédé selon la revendication 10, **caractérisé en ce que** l'autre modification d'écart est réalisée au niveau d'une roue de remise (25).

14. Procédé selon l'une quelconque des revendications 10 à 13, **caractérisé en ce qu'**une modification d'écart en deux étapes est réalisée.

15. Procédé selon l'une quelconque des revendications 10 à 13, **caractérisé en ce qu'**une modification d'écart en trois étapes est réalisée

16. Procédé selon l'une quelconque des revendications 10 à 15, **caractérisé en ce que** l'écart des préformés (1) l'un par rapport à l'autre est agrandi lors de chaque modification d'écart.
